# DEMANDE DE BREVET EUROPEEN

(11) **EP 1 092 960 A1**
(43) Date de publication de la demande: **18.04.2001**
(21) Numéro de dépôt: 00402749.6
(22) Date de dépôt: 06.10.2000
(51) Int. Cl.: G01F 1/44, G01F 7/00

(54) **Débitmètre**

(30) Priorité: 14.10.1999 FR 9912825
(71) Demandeur: Cran, 10400 Nogent sur Seine (FR)
(72) Inventeur: Raffort, Joel, 10800 Saint Julien les Villes (FR)
(74) Mandataire: Debay, Yves

(57) **Abrégé**

La présente invention concerne un débitmètre démontable et modulable comprenant un venturi (50) comportant deux sections (51, 52) tronconiques coaxiales et de dimensions déterminées dont les extrémités de plus petit diamètre sont reliées par une section (53) cylindrique intermédiaire, caractérisé en ce que le débitmètre comprenant des moyens (60, 70) de mesure d'une différence de pression dans le venturi, entre une première position dite amont et une deuxième position dite aval, ces moyens (60, 70) étant montés sur le venturi, la position amont étant située en amont de la section (51) tronconique dite amont, située en amont par rapport au sens F d'écoulement du fluide et la deuxième position étant dans la section (53) cylindrique intermédiaire, le débitmètre comprenant également des moyens de détermination du débit du fluide en fonction de la valeur de la différence de pression, et des moyens de mesure de la pression.

## Description

La présente invention concerne un débitmètre.

La plupart des débitmètres de l'art antérieur utilise un dispositif à turbine ou à ultrasons pour mesurer en continu le débit de fluide au travers d'une canalisation. Ces dispositifs sont peu précis. De plus, ils ne permettent pas de mesurer le débit dans une plage de valeurs de débit important avec une forte pression.

Il est également connu dans l'art antérieur des débitmètres intégrant un venturi pour mesurer en un point précis d'une canalisation, une valeur précise de débit déterminé. Ce type de débitmètre est donc spécialement conçu pour la mesure précise d'un débit déterminé et n'est pas adapté pour mesurer un débit pouvant varier dans un intervalle important de valeurs.

La présente invention a donc pour objet de pallier les inconvénients de l'art antérieur en proposant un débitmètre permettant de mesurer le débit d'un fluide de façon très précise, même lorsque le débit varie dans un intervalle important de valeurs.

Ce but est atteint le débitmètre démontable et modulable selon la revendication 1.

Des développements supplémentaires de l'invention seront décrits dans les revendications 2 à 13.

D'autres particularités et avantages de la présente invention apparaîtront plus clairement à la lecture de la description ci-après faite en référence aux dessins annexés dans lesquels :
- la figure 1 représente une vue en perspective du débitmètre selon l'invention,
- la figure 2 représente une vue en coupe selon l'axe longitudinal du débitmètre,
- la figure 3 représente une vue en coupe selon le plan AA de la figure 1,
- les figures 4A et 4B représentent respectivement une vue de face du distributeur et une vue en coupe du distributeur selon le plan BB de la figure 4A,
- la figure 5 représente une vue de face des moyens de fixation du distributeur sur le venturi,
- la figure 6 représente une vue de face d'une pièce de fixation d'un moyen de mesure de pression.

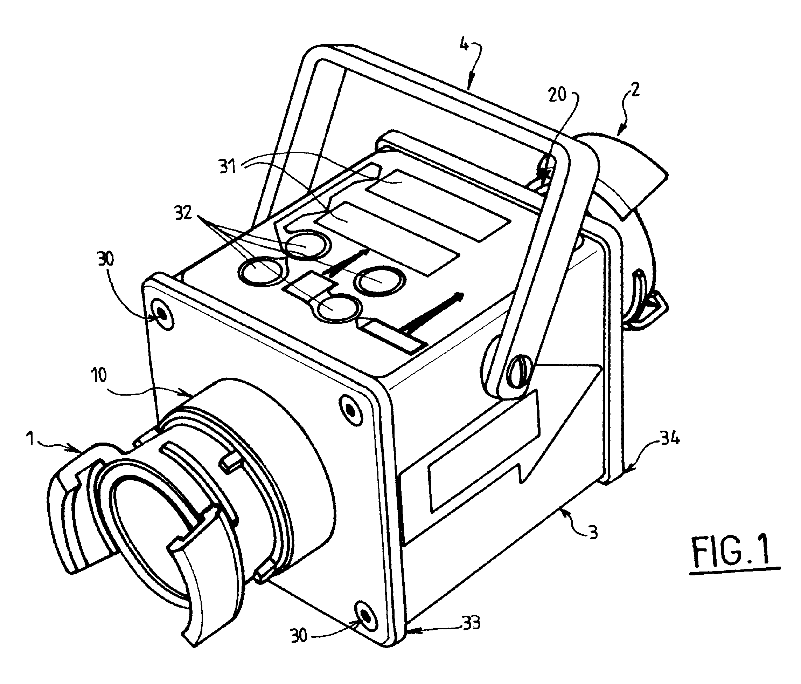

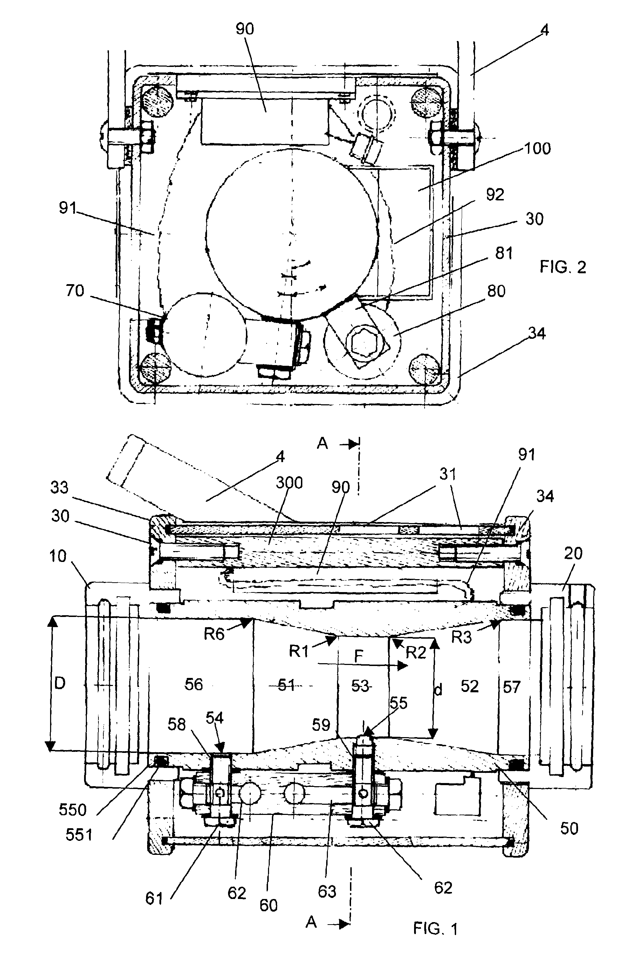

Le débitmètre va à présent être décrit en référence aux figures 1 à 3. Le débitmètre, selon l'invention, comprend un châssis sur lequel sont montés, un raccord (1) d'entrée et un raccord de sortie (2) permettant de brancher le débitmètre selon l'invention sur une conduite ou une canalisation pour laquelle on souhaite connaître en continu la valeur du débit du fluide circulant dans la conduite. Ces raccords (1, 2) sont montés sur des bagues (10, 20) de raccordement, solidaires du châssis. Les raccords (1, 2) peuvent être conformés pour correspondre à un type de raccord standard choisi par l'utilisateur. Les bagues (10, 20) de raccordement sont montées sur le châssis par l'intermédiaire, par exemple, d'un vissage. Le châssis comprend essentiellement un carter (3) sensiblement parallélépipédique, constitué, par exemple, d'une tôle pliée puis soudée et de deux plaques (33, 34) formant deux brides fermant les extrémité latérales du carter (3). Les brides (33, 34) permettent le montage, par exemple, par vissage des bagues (10, 20) de raccordement des raccords (1, 2). Les deux brides (33, 34) sont maintenues solidaires l'une de l'autre, par exemple, par l'intermédiaire, de quatre entretoises (300) montées respectivement sur les quatre angles de chaque bride (33, 34) par l'intermédiaire de vis (30). Le vissage peut être complété, par exemple, par un collage, ou par la mise en place de joints, pour assurer une étanchéité parfaite du châssis.

Le châssis peut également comprendre une poignée (4) fixée sur le carter (3) et facilitant le transport du débitmètre.

Le châssis permet notamment de loger un corps (50) constitué d'un venturi.

Le venturi (50) comprend notamment deux sections tronconiques (51, 52) coaxiales dont les extrémités de plus petit diamètre sont reliées par une section (53) cylindrique intermédiaire de dimension déterminée. Le venturi (50) comprend également une section (56) cylindrique d'entrée qui a le même diamètre et qui est adjacente à la section tronconique (51) située en amont dans le sens F de circulation du fluide dans le venturi (50). Le venturi (50) comprend également une section (57) cylindrique de sortie qui a le même diamètre et qui est adjacente à la section (52) tronconique située en aval dans le sens F de circulation du fluide dans le venturi (50). Par la suite, D désigne la valeur du diamètre d'entrée de la section (51) tronconique amont et la valeur du diamètre de sortie de la section (51) tronconique aval et d désigne la valeur du diamètre de la section (53) cylindrique intermédiaire. Ainsi, dans une variante de réalisation, la longueur de la section (56) tronconique d'entrée est sensiblement égale à 0,85D.

La longueur de la section cylindrique (53) intermédiaire correspond, par exemple, sensiblement à la moitié de la valeur de son diamètre d. La longueur de la section (52) tronconique aval est déterminé pour que l'écoulement du fluide dans le venturi (50) corresponde à l'écoulement d'un fluide parfait. En d'autres termes, l'écoulement doit s'effectuer sans frottement, sans perte de charge et de sorte que la répartition des vitesses du fluide dans la section tronconique d'entrée et dans la section (53) cylindrique intermédiaire soit uniforme. Pour ce faire, l'angle du tronc de cône formant la section (51) tronconique amont est déterminé pour éviter la formation de perturbations dans l'écoulement de fluide ce qui évite une perte de charge. A titre d'exemple, la valeur maximum de cet angle est comprise entre 20 et 24°. Dans le même but, l'angle du tronc de cône formant la section (52) tronconique aval a une valeur maximum comprise entre 15 et 18°. Cette valeur peut être ajustée en fonction d'une premier rayon (R6) entre la section (56) tronconique d'entrée et la section (51) tronconique amont, d'un deuxième rayon (R1) entre la section (51) tronconique amont et la section (53) cylindrique intermédiaire, d'un troisième rayon (R2) entre la section (53) cylindrique intermédiaire et la section (52) tronconique aval et d'un quatrième rayon (R3) entre la section (52) tronconique aval et la section (57) tronconique de sortie. Dans une variante de réalisation les deuxième, troisième et quatrième rayons (R1, R2, R3) correspondent au rayon de l'outil d'usinage du venturi (50), c'est-à-dire que ces rayons sont en fait des angles vifs. Dans cette même variante de réalisation, le premier rayon (R6) est compris entre 0,10D et 0,25D.

La surface intérieure du venturi (50) subit un usinage et un traitement de surface particulier afin d'éviter la formation de perturbations dans l'écoulement du fluide et pour obtenir l'écoulement d'un fluide parfait. Ce traitement a pour but de lisser toutes les irrégularités de la surface. Dans une variante de réalisation, le traitement de surface consiste en une anodisation dure avec imprégnation de Téflon (marque déposée), pour obtenir une surface glacée ayant un coefficient de frottement, avec le fluide, voisin de zéro.

La section (56) cylindrique d'entrée, et la section (57) cylindrique de sortie comprennent, par exemple, une gorge (550) dans laquelle vient se loger un joint (551) réalisant l'étanchéité entre chaque bague (10, 20) de raccordement et le venturi (50) sur lequel elle est montée.

Le principe de mesure du débit du débitmètre, selon l'invention, est basé sur la mesure d'une différence de pression entre deux points du parcours du fluide dans le venturi (50). Ainsi, le débitmètre, selon l'invention, comprend des moyens (60) de mesure d'une différence de pression du fluide circulant dans le venturi (50), entre une première position, dite position amont et une deuxième position dite position aval. La première et la deuxième positions sont matérialisées dans le venturi (50) par un premier alésage (58) taraudé radial situé dans la section (54) cylindrique d'entrée, et par un deuxième alésage (59) taraudé radial situé dans la section cylindrique (53) intermédiaire. L'axe longitudinal du premier alésage (58) est, par exemple, situé à une distance déterminée de l'entrée de la section tronconique (51) amont. Cette distance est comprise entre un quart et la moitié de la valeur du diamètre d'entrée de la section (51) tronconique amont. L'axe longitudinal du deuxième alésage (59) est, par exemple, situé sensiblement au milieu de la section (53) intermédiaire.

Le diamètre du premier alésage (58), respectivement du deuxième alésage (59) est au maximum égal à 0,1D, respectivement 0,13d.

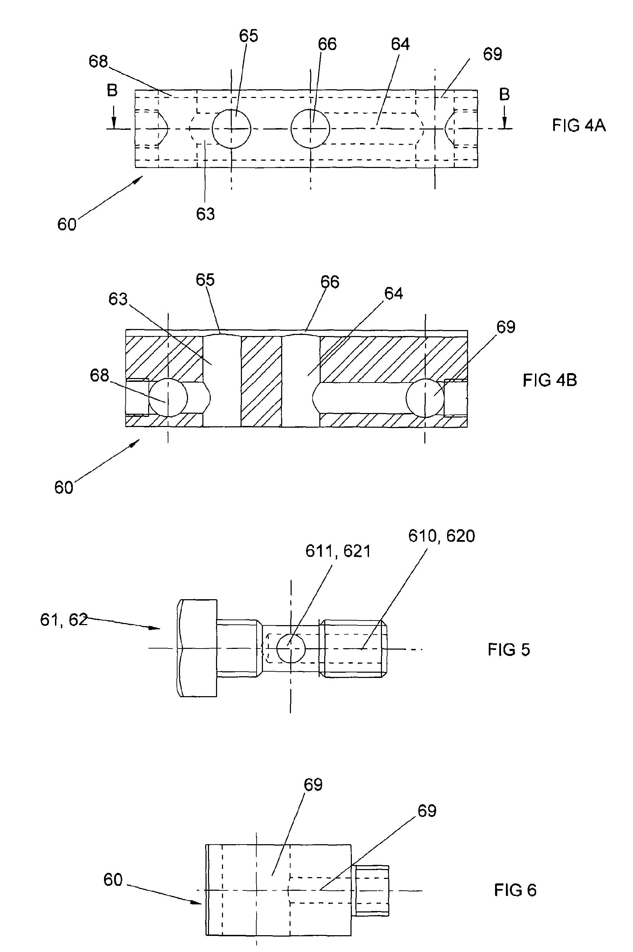

Ces deux alésages (58, 59) permettent le montage d'un distributeur (60), représenté en détails figure 4A et 4B, sur lequel est monté un capteur (70) de différentiel de pression. Le capteur (70) de différentiel de pression utilisé est, par exemple, un capteur piézoélectrique de l'art antérieur.

Le venturi (50) peut également comprendre des moyens (80) de mesure de pression. Ces moyens (80) de mesure de pression sont montés sur une prise de pression constituée d'un troisième alésage taraudé (non représenté) radial pratiqué sensiblement au même niveau que la première prise de pression (58) amont mais avec un décalage angulaire déterminé afin de loger un capteur (80) de pression. Le montage du capteur (80) de pression est réalisé de manière connue par l'intermédiaire d'une pièce (81) mécanique de liaison, représentée en détails figure 6, appelée par l'homme du métier « banjo » (marque déposée), et montée sur le troisième alésage, par exemple, par vissage. La pièce (81) mécanique de liaison comprend un premier perçage (810) central destiné à établir une communication de fluide entre l'intérieur du venturi (50, fig. 2 et 3) et le capteur (80, fig. 2 et 3) et un deuxième perçage (811) destiné au montage du capteur (80) de pression sur la pièce (81) mécanique de liaison.

Selon l'art antérieur, un capteur (70) de différentiel de pression comprend deux orifices ayant un entraxe fixe et relativement réduit, correspondant à l'entraxe entre deux prises de pression. La mise en place du distributeur (60), selon l'invention, permet d'augmenter l'entraxe des deux prises de pression. L'éloignement des deux prises de pression l'une de l'autre permet entre autre d'augmenter la précision de la mesure du débit. Selon les figures 4A et 4B, le distributeur comprend pour chaque prise de pression du capteur (70) de différentiel de pression, un canal (63, 64) dont une première extrémité (68, 69) débouche dans le premier ou le deuxième alésage (58, 59) du venturi (50) et dont la deuxième extrémité (65, 66) débouche dans l'un des orifices du capteur (70) différentiel de pression.

Le distributeur (60) est monté sur le venturi (50) par l'intermédiaire de moyens (61, 62) de fixation, représentés en détails figure 5, permettant également la circulation du fluide vers chaque canal (63, 64) du distributeur (60). Ces moyens (61, 62) de fixation peuvent comprendre une première (61) respectivement une deuxième (62) vis traversant le distributeur (60) par deux alésages (680, 690, fig. 4A et 4B), pour se visser dans le premier (54) respectivement le deuxième (55) alésages du venturi (50). Chaque vis (61, 62) comprend un premier perçage (610, 620) longitudinal et perpendiculaire à l'axe longitudinal du venturi (50) et un deuxième perçage (611, 621) perpendiculaire au premier perçage de la vis, et débouchant dans le canal (63, 64) correspondant du distributeur (60) lorsque celui-ci est monté sur le venturi (50).

Le débitmètre, selon l'invention, comprend des moyens (90) de détermination de la valeur de débit. Ces moyens (90) comprennent un dispositif électronique, tel qu'un circuit imprimé comportant un microcontrôleur, dont une première entrée est connectée par une connexion (91) appropriée, au capteur (70) différentiel de pression. Cette connexion (91) permet au dispositif électronique de recevoir des signaux, par exemple, analogiques, représentatifs de la différence de pression entre la première (54) et la deuxième (55) position. Le signal transmis par le capteur est en fait une valeur de tension correspondant à la différence de tension entre le premier et le deuxième orifices du capteur. Dans la variante de réalisation représentée aux figures 2 et 3, le dispositif électronique reçoit également sur une deuxième entrée, par l'intermédiaire d'une connexion appropriée (92) un signal provenant du capteur de pression (80) et représentatif de la pression d'entrée.

Lorsque le fluide traversant le débitmètre est de l'eau ou un liquide ayant sensiblement la même densité et la même viscosité que l'eau, le microcontrôleur du dispositif électronique comprend, par exemple, dans sa mémoire, une table de correspondance entre une valeur de débit et une valeur du signal représentatif de la valeur de la différence de pression. La valeur du signal correspond, par exemple, à une valeur de tension. Cette table de correspondance possède donc une entrée correspondant à la valeur du signal représentatif de la valeur de la différence de pression et fournit en sortie la valeur du débit correspondant.

Ainsi, lorsque le microcontrôleur reçoit un signal provenant du capteur (70) de différentiel de pression, celui-ci consulte, par exemple par l'intermédiaire d'un programme ou d'une procédure appropriée, la table de correspondance pour rechercher la valeur du débit correspondant à la valeur du signal reçu et représentatif de la valeur de la différence de pression.

Lorsque le fluide traversant le débitmètre est un gaz ou un fluide dont la viscosité est du même ordre de grandeur que la viscosité de l'huile, le microcontrôleur du dispositif (90) électronique comprend, par exemple, dans sa mémoire, une table de correspondance à deux entrées. Une première entrée de la table correspond à une valeur du signal représentatif de la valeur de la différence de pression, une deuxième entrée de la table correspond à une valeur du signal, transmis par le capteur de pression et représentatif de la valeur de la pression d'entrée. En sortie, la table de correspondance fournit la valeur du débit correspondant à une différence de pression donnée pour une pression d'entrée donnée. En effet, la détermination du débit d'un gaz à partir de la connaissance de la différence de pression, fait intervenir le facteur de compression de ce gaz, or ce facteur de compression est variable en fonction de la pression. De même, la détermination du débit d'une huile à partir de la connaissance de la différence de pression, fait intervenir la viscosité de cette huile, or cette viscosité est variable en fonction de la pression.

Ainsi, lorsque le microcontrôleur reçoit un signal provenant du capteur (70) de différentiel de pression, celui-ci consulte, par exemple, par l'intermédiaire d'un programme ou d'une procédure appropriée, la table de correspondance pour rechercher la valeur du débit correspondant à la valeur du signal représentatif de la valeur de la différence de pression.

Ainsi, la détermination de la valeur du débit ne fait intervenir aucun calcul, mais est réalisée par l'intermédiaire d'une consultation d'une table de correspondance dont les valeurs ont été préalablement déterminées par un calcul et mémorisées dans le dispositif (90) électronique.

Une fois la valeur de débit déterminée par le dispositif (90) électronique, celle-ci est, par exemple, affichée par l'intermédiaire de moyens d'affichage contrôlés, par exemple par le microcontrôleur du dispositif (90) électronique. Les moyens d'affichage peuvent comprendre au moins un afficheur de type électroluminescent ou à écran à cristaux liquides ou tout autre type équivalent d'afficheur, inséré dans une fenêtre (31) pratiquée sur une face du carter (3).

Lorsque la valeur du signal représentatif de la différence de pression est supérieure à la valeur maximale ou inférieure à la valeur minimale comprise dans la table, alors le programme du microcontrôleur provoque le clignotement de l'affichage, afin d'avertir l'utilisateur que la valeur affichée peut être erronée et que le débitmètre n'est plus adapté au débit du fluide s'écoulant dans le débitmètre.

Dans une variante de réalisation, la mémoire du microcontrôleur comprend les différentes tables de correspondance associées à chaque type de fluide. La détermination de la valeur du débit est alors précédée par la sélection du type de fluide s'écoulant dans le venturi (50). Cette sélection est réalisée, par exemple, par l'intermédiaire de moyens de sélection tel qu'un bouton de commande. La validation de la sélection du type de fluide déclenche une procédure ou un programme du microcontrôleur pour sélectionner la table de correspondance correspondant au fluide sélectionné.

De même, le programme du microcontrôleur peut prendre en compte des paramètres physiques, tels que la température du fluide, ayant une influence sur la pression ou le débit en appliquant un coefficient de correction dans les tables de correspondance. Ces coefficients sont déterminés préalablement pour chaque paramètre et sont mémorisés, par exemple, dans des tables spécifiques. La mesure des paramètres physiques est réalisée, par exemple, par des capteurs appropriés connectés au dispositif électronique.

Dans une variante de réalisation, le microcontrôleur du dispositif (90) électronique comprend également un programme totalisant la quantité de fluide ayant traversé le débitmètre depuis un instant déterminé par l'utilisateur. La valeur de la quantité de fluide ayant traversé le débitmètre est également mémorisée, par exemple, dans la mémoire du microcontrôleur.

De même, dans une autre variante de réalisation, le dispositif (90) électronique commande des moyens d'affichage pour visualiser la valeur de la pression d'entrée mesurée par le capteur (80) de pression. Ces moyens d'affichage peuvent comprendre un afficheur de type électroluminescent ou à écran à cristaux liquides ou tout autre type équivalent d'afficheur et peuvent être commandés par le microcontrôleur du dispositif électronique (90).

La détermination de la valeur de débit peut intervenir, soit sur demande de l'utilisateur, par exemple, par l'intermédiaire de moyens de sélection fournissant un signal au dispositif électronique déclenchant la procédure de détermination telle que décrite précédemment, soit à intervalles prédéterminés à partir d'un instant choisi par l'utilisateur, par l'intermédiaire de moyens de sélection fournissant un signal au dispositif électronique déclenchant la procédure de détermination telle que décrite précédemment.

Les moyens de sélection comprennent, par exemple, au moins un bouton de commande connecté par une liaison appropriée (non représentée) au dispositif (90) électronique. L'enfoncement d'un premier bouton de commande provoque le déclenchement d'une procédure de détermination du débit puis l'affichage de cette valeur, et éventuellement l'affichage de la pression d'entrée. L'enfoncement d'un deuxième bouton de commande provoque l'affichage de la quantité de fluide ayant traversé le débitmètre. L'enfoncement d'un troisième bouton de sélection provoque, par exemple, l'initialisation de la procédure de totalisation en effaçant la précédente valeur mémorisée de la quantité de fluide ayant traversé le débitmètre, puis le lancement du programme de calcul de la quantité de fluide ayant traversé le débitmètre.

La détermination du débit ou le déclenchement de la procédure de totalisation peuvent être précédés par un calibrage du capteur de différentiel de pression. En effet, des tensions parasites peuvent apparaître au niveau du capteur. Le calibrage consiste à mettre l'appareil sous tension lorsque aucun fluide ne traverse le débitmètre et à déclencher la procédure de détermination du débit. Si des tensions parasites règnent au niveau du capteur, alors le capteur mesure une différence de tension entre les deux positions. Par conséquent, une valeur de débit est déterminée alors qu'aucun fluide ne traverse le débitmètre. Dans ce cas, la différence de tensions est annulée pour que le débit mesuré soit égal à zéro. Le calibrage est également effectué lorsque le débitmètre est incliné, c'est-à-dire lorsqu'il existe une différence de hauteur par rapport à l'horizontal entre l'orifice amont et l'orifice aval du capteur de différentiel de pression. En effet, cette différence de hauteur génère une différence de tension qui provoque la détermination d'un débit différent de zéro alors qu'aucun fluide ne s'écoule dans le débitmètre.

La nécessité d'un calibrage peut être matérialisée par un affichage particulier sur les moyens d'affichage. Ainsi, si la différence de tension correspond à une valeur de débit, cette valeur est affichée, ce qui indique à l'utilisateur qu'un calibrage est nécessaire. De même, lorsque la différence de pression ne correspond pas à une valeur de débit, par exemple lorsque la différence de tension est négative, alors un affichage déterminé, par exemple clignotant est affiché.

Le dispositif (90) électronique peut également comprendre un port de communication avec un système hôte. Le port choisi peut être un port série de type RS 232 et le système hôte peut être un ordinateur. De même, les valeurs de débit des tables de correspondance peuvent être déterminées dans l'unité de mesure du débit, de la pression, et de la totalisation, du pays ou de la zone géographique où est utilisé le débitmètre.

Le capteur (70) de différentiel de pression, le capteur (80) de pression, les moyens d'affichage et le dispositif (90) électronique, sont alimentés électriquement par, au moins une batterie rechargeable (100) montée dans le châssis du débitmètre selon l'invention et/ou par l'intermédiaire du réseau de distribution d'électricité au travers d'un transformateur et d'un connecteur extérieur.

Dans une autre variante de réalisation (non représentée), le venturi comprend au moins une deuxième section tronconique amont de section différente. Dans chaque nouvelle section tronconique amont, une prise de pression amont est pratiquée et pour chaque deuxième prise de pression amont supplémentaire un canal correspondant est réalisé dans le distributeur. Chacun de ces canaux débouche dans l'orifice amont du capteur de différentiel de pression. Chaque deuxième prise de pression amont est située entre la première prise amont et la prise de pression aval. Le distributeur comprend des moyens de sélection d'un canal correspondant à une prise amont. Ces moyens de sélection comprennent pour chaque canal d'une prise de pression amont, une électrovanne commandée, par exemple, par le dispositif électronique. La mise en place de la ou des prises de pression amont supplémentaires permet d'utiliser un capteur différentiel de pression plus précis, c'est-à-dire qui a une plage de mesure de différence de pression plus étroite. La sélection d'une prise de pression amont consiste à ouvrir l'électrovanne du canal correspondant et à fermer toutes les autres. Le choix d'une prise de pression amont est déterminé par la valeur attendue du débit. Plus le débit attendu est faible, plus la distance entre la prise de pression amont et la prise de pression aval doit être grande et plus le rapport d/D entre le diamètre de la section cylindrique intermédiaire et le diamètre d'entrée de la section tronconique amont est important.

On conçoit que le débitmètre, selon l'invention, permette de mesurer avec une grande précision et une grande régularité le débit d'un fluide au travers d'une conduite. De plus, compte tenu de la structure simple du débitmètre, selon l'invention, il est possible de l'adapter sans modifications importantes à divers type de fluide en modifiant, par exemple, la programmation du dispositif électronique. De même, la conception particulière du débitmètre permet de l'utiliser sous des pressions pouvant dépasser 40 bars sans le modifier. De même, la conception particulière du débitmètre permet, avec un même débitmètre, de mesurer des débits pour des intervalles pour lesquelles le rapport entre le débit minimum mesurable et le débit maximum mesurable est de l'ordre de 50. Dans une exemple de réalisation, le débitmètre conçu selon l'invention peut mesurer des débits d'eau entre 0,3 et 15 m/s. Il est également possible de changer le type de raccord à la conduite en changeant simplement les bagues de raccordement (10, 20).

Ainsi, le débitmètre démontable et modulable comprenant un venturi (50) comportant deux sections (51, 52) tronconiques coaxiales et de dimensions déterminées dont les extrémités de plus petit diamètre sont reliées par une section (53) cylindrique intermédiaire, se caractérise en ce que le débitmètre comprenant des moyens (60, 70) de mesure d'une différence de pression dans le venturi, entre une première position dite amont et une deuxième position dite aval, ces moyens (60, 70) étant montés sur le venturi, la position amont étant située en amont de la section (51) tronconique dite amont, située en amont par rapport au sens F d'écoulement du fluide et la deuxième position étant dans la section (53) cylindrique intermédiaire, le débitmètre comprenant également des moyens de mesure de la pression et des moyens de détermination du débit du fluide en fonction de la valeur de la différence de pression et de la valeur de la pression.

Selon une autre particularité, les moyens de détermination de la valeur du débit comprenant un dispositif électronique comportant un microcontrôleur, le microcontrôleur comprenant dans sa mémoire une table de correspondance entre des valeurs de débits et des informations représentatives de la valeur de la différence de pression fournies par les moyens de mesure de la différence de pression.

Selon une autre particularité, les moyens de mesure de la valeur du débit comprennent un capteur différentiel de pression comprenant une prise de pression amont et une prise de pression aval, le capteur étant monté sur des moyens de distribution permettant de connecter la prise de pression amont du capteur à la première position et de connecter la prise de pression aval à la deuxième position.

Selon une autre particularité, la distance entre la position amont (54) et l'extrémité amont de la section (51) tronconique amont, est comprise entre un quart et la moitié du diamètre d'entrée de la section (51) tronconique amont.

Selon une autre particularité, l'angle de la section tronconique (52), située en aval de la section cylindrique par rapport au sens F d'écoulement du fluide, est déterminé pour éviter toutes pertes de charges en aval de la deuxième position et a une valeur maximale comprise entre 15 et 18°.

Selon une autre particularité, l'angle de la section tronconique (52), située en amont de la section cylindrique par rapport au sens F d'écoulement du fluide, est déterminé pour éviter toutes pertes de charges en aval de la deuxième position et a une valeur maximale comprise entre 20 et 24°.

Selon une autre particularité, la longueur de la section (53) intermédiaire est sensiblement égale à la moitié de son diamètre.

Selon une autre particularité, la surface intérieure du venturi (50) est usinée et traitée de sorte que l'écoulement du fluide dans le venturi (50) corresponde à l'écoulement d'un fluide parfait, pour que la répartition des vitesses d'écoulement au niveau de la première et de la deuxième positions soit uniforme et pour éviter une perte de charge, le traitement de surface étant préférentiellement une anodisation dure avec imprégnation de Téflon pour obtenir une surface glacée.

Selon une autre particularité, le microprocesseur comprend un programme destiné à déterminer le volume de fluide ayant traversé le débitmètre pendant une période déterminée, cette valeur étant mémorisée dans la mémoire du microcontrôleur.

Selon une autre particularité, le dispositif (90) électronique comprend un port de communication avec un système hôte, pour transmettre les valeurs trouvées des débits vers le système hôte.

Selon une autre particularité, les moyens (70) de mesure de la différence de pression, les moyens (80) de pression et les moyens (90) de détermination sont alimentés électriquement par une batterie (100) rechargeable intégrée au débitmètre ou bien par un système d'alimentation électrique extérieur, par l'intermédiaire d'un connecteur.

Selon une autre particularité, la tension du courant d'alimentation du débitmètre est comprise entre 12 et 24 volts.

Selon une autre particularité, le débitmètre comprend au moins une deuxième position amont située entre la première position amont et la position aval, les moyens de mesure comprenant des moyens de sélection de la position amont utilisée pour mesurer la différence de pression, le choix de la position amont étant déterminé par l'ordre de grandeur du débit attendu du fluide.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Débitmètre démontable et modulable comprenant un venturi (50) comportant deux sections (51, 52) tronconiques coaxiales et de dimensions déterminées dont les extrémités de plus petit diamètre sont reliées par une section (53) cylindrique intermédiaire, caractérisé en ce que le débitmètre comprenant des moyens (60, 70) de mesure d'une différence de pression dans le venturi, entre une première position dite amont et une deuxième position dite aval, ces moyens (60, 70) étant montés sur le venturi, la position amont étant située en amont de la section (51) tronconique dite amont, située en amont par rapport au sens F d'écoulement du fluide et la deuxième position étant dans la section (53) cylindrique intermédiaire, le débitmètre comprenant également des moyens de mesure de la pression et des moyens de détermination du débit du fluide en fonction de la valeur de la différence de pression et de la valeur de la pression.

2. Débitmètre selon la revendication 1, caractérisé en ce que les moyens de détermination de la valeur du débit comprenant un dispositif électronique comportant un microcontrôleur, le microcontrôleur comprenant dans sa mémoire une table de correspondance entre des valeurs de débits et des informations représentatives de la valeur de la différence de pression fournies par les moyens de mesure de la différence de pression.

3. Débitmètre selon la revendication 1 ou 2, caractérisé en ce que les moyens de mesure de la valeur du débit comprennent un capteur différentiel de pression comprenant une prise de pression amont et une prise de pression aval, le capteur étant monté sur des moyens de distribution permettant de connecter la prise de pression amont du capteur à la première position et de connecter la prise de pression aval à la deuxième position.

4. Débitmètre selon l'une des revendications 1 à 3, caractérisé en ce que la distance entre la position amont (54) et l'extrémité amont de la section (51) tronconique amont, est comprise entre un quart et la moitié du diamètre d'entrée de la section (51) tronconique amont.

5. Débitmètre selon l'une des revendications 1 à 4 caractérisé en ce que l'angle de la section tronconique (52), située en aval de la section cylindrique par rapport au sens F d'écoulement du fluide, est déterminé pour éviter toutes pertes de charges en aval de la deuxième position et a une valeur maximale comprise entre 15 et 18°.

6. Débitmètre selon l'une des revendications 1 à 5, caractérisé en ce que l'angle de la section tronconique (52), située en amont de la section cylindrique par rapport au sens F d'écoulement du fluide, est déterminé pour éviter toutes pertes de charges en aval de la deuxième position et a une valeur maximale comprise entre 20 et 24°.

7. Débitmètre selon l'une des revendications 1 à 6, caractérisé en ce que la longueur de la section (53) intermédiaire est sensiblement égale à la moitié de son diamètre.

8. Débitmètre selon l'une des revendications 1 à 7, caractérisé en ce que la surface intérieure du venturi (50) est usinée et traitée de sorte que l'écoulement du fluide dans le venturi (50) corresponde à l'écoulement d'un fluide parfait, pour que la répartition des vitesses d'écoulement au niveau de la première et de la deuxième positions soit uniforme et pour éviter une perte de charge, le traitement de surface étant préférentiellement une anodisation dure avec imprégnation de Téflon pour obtenir une surface glacée.

9. Débitmètre selon la revendication 2, caractérisé en ce que le microprocesseur comprend un programme destiné à déterminer le volume de fluide ayant traversé le débitmètre pendant une période déterminée, cette valeur étant mémorisée dans la mémoire du microcontrôleur.

10. Débitmètre selon l'une des revendications 2 ou 9, caractérisé en ce que le dispositif (90) électronique comprend un port de communication avec un système hôte, pour transmettre les valeurs trouvées des débits vers le système hôte.

11. Débitmètre selon l'une des revendications 1 à 10, caractérisé en ce que les moyens (70) de mesure de la différence de pression, les moyens (80) de pression et les moyens (90) de détermination sont alimentés électriquement par une batterie (100) rechargeable intégrée au débitmètre ou bien par un système d'alimentation électrique extérieur, par l'intermédiaire d'un connecteur.

12. Débitmètre selon la revendication 11, caractérisé en ce que la tension du courant d'alimentation du débitmètre est comprise entre 12 et 24 volts.

13. Débitmètre selon l'une des revendications 1 à 12, caractérisé en ce que le débitmètre comprend au moins une deuxième position amont située entre la première position amont et la position aval, les moyens de mesure comprenant des moyens de sélection de la position amont utilisée pour mesurer la différence de pression, le choix de la position amont étant déterminé par l'ordre de grandeur du débit attendu du fluide.
